# EUROPEAN PATENT SPECIFICATION

(11) **EP 3 761 141 B1**
(45) Date of publication and mention of the grant of the patent: **15.02.2023**
(21) Application number: 20183778.8
(22) Date of filing: 02.07.2020
(51) Int. Cl.: G05D 1/02, G05D 1/00, A01D 34/00

(54) **METHOD FOR MAPPING A WORKING AREA OF A MOBILE DEVICE**
VERFAHREN ZUR ABBILDUNG EINES ARBEITSBEREICHS EINER MOBILEN VORRICHTUNG
PROCÉDÉ DE MAPPAGE D'UNE ZONE DE TRAVAIL D'UN DISPOSITIF MOBILE

(30) Priority: 02.07.2019 IT 201900010641
(43) Date of publication of application: 06.01.2021
(60) Divisional application: 21199105.4
(73) Proprietor: Stiga S.p.A. in breve anche St. S.p.A., 31033 Castelfranco Veneto (TV) (IT)
(72) Inventor: SCAPIN, Michele, 36061 Bassano del Grappa (VI) (IT); CECCHETTO, Mauro, 35018 San Martino di Lupari (PD) (IT); VALLONE, Varna, 31033 Castelfranco Veneto (TV) (IT); ROBINSON, Sean, 31033 Castelfranco Veneto (TV) (IT)
(74) Representative: PGA S.p.A.

(56) References cited:
- WO-A1-2018/108180
- US-A1- 2014 031 980
- US-A1- 2017 285 630
- US-A1- 2019 031 237
- US-B2- 8 527 197

## Description

### FIELD OF THE INVENTION

The present invention relates to a mapping method of a working area, such as fields, lawns, gardens or agricultural lands, wherein a mobile device is configured to operate. The mobile device can be a device for the maintenance of land, such as a robot lawnmower.

### PRIOR ART

Self-driving mobile devices (robots) which can be used in a working area, such as a garden, to perform specific operations, in particular mowing, are known. These devices are subject to rather strict safety regulations, given that potentially dangerous payloads are used to carry out their operations, for example a rotating blade.

Above all, this regulation places very severe constraints on the capability of the devices to remain in their working area. Once the contours of this working area have been defined, these contours cannot be exceeded by self-driving mobile devices except for truly minimal trespassing (indicatively less than 100 cm) admissible on the basis of the strict tolerances required by law. Considering that the contours can separate the working area for example from a road or a swimming pool, the stringent tolerances are easily understandable, given that if mobile devices were to escape significantly from the working area, they would harm the safety of people passing by on the road or swimming in the pool.

Therefore, the legislation has made it inevitable, when installing an autonomous mobile device, to lay perimeter wire to physically define the contour of the working area. However, this laying is a particularly unwanted operation since the perimeter wire must be buried or fixed by means of pegs. As the size of the working area increases and/or as the complexity of the geometry of the working area increases, laying perimeter wire becomes an increasingly complex, long and tiring operation.

Not even the affirmation of increasingly performing satellite technologies for detecting the position have so far managed to overcome the need to lay the perimeter wire, which therefore, to date, must be present in correspondence with all the contours of the working area that can be crossed by self-driving mobile devices.

Document US2014/0031980A1 discloses a method of performing SLAM (i.e. Simultaneous Localization And Mapping) for a robot. The method comprises performing SLAM in a first area associated with a first map, performing SLAM in a second area associated with a second map and performing position estimation in a third area outside of and between the first area and the second area. The position estimation in the third area is performed with dead reckoning, in particular by using odometry and a gyroscope. If the position uncertainty in the third area is larger than a predetermined threshold, the robot is moved back to the first area or to the second area.

### PURPOSE OF THE INVENTION

The objective of the present invention is to solve at least one of the drawbacks and/or limitations of the previous solutions in the technical field of automated guided mobile devices, such as, for example, robot lawnmowers.

A first objective of the present invention is to provide a mapping method of a working area of a mobile device and/or an operating method of a mobile device which can comply with the stringent current regulations, without requiring the installation of perimeter wire.

A second objective of the present invention is to provide a mapping method of a working area of a mobile device and/or an operating method of a mobile device which can make it possible to avoid that any deviations of the device moving from the working area exceed the expected tolerance (even when this tolerance is minor than 100 cm).

A third objective of the present invention is to provide a mapping method of a working area of a mobile device and/or an operating method of a mobile device which are functional to guarantee maximum safety in the operation of the self-driving mobile device, even when the latter uses a potentially dangerous payload such as a rotating blade.

A fourth objective of the present invention is to provide a method for mapping a working area of a mobile device and/or an operating method of a mobile device which suitably takes into account the peculiarities of the contours of the working area of the mobile device.

A fifth objective of the present invention is to provide a mapping method of a working area of a mobile device and/or an operating method of a mobile device which allow to install the mobile device in a particularly easy, effective and intuitive way, taking advantage of network technologies to program the operations of the mobile device, perform its monitoring and/or control it.

These and other objectives, which will appear more clearly from the following description, are substantially achieved by a mapping method in accordance with one or more of the appended claims.

### BRIEF DESCRIPTION OF THE DRAWINGS

Some embodiments and some aspects of the invention will be described below with reference to the accompanying drawings, provided for indicative and therefore nonlimiting purposes only, wherein:
- Figure 1 is a representation of a possible mapping performed on the basis of the teachings of the present invention starting from a first example of a working area;
- Figure 2 is a representation of a possible mapping performed on the basis of the teachings of the present invention starting from a second example of a working area;
- Figure 3 is a flow diagram illustrating an embodiment, provided purely by way of example, and not as a limitation, of the mapping method of a working area according to the teachings of the present invention;
- Figure 4 is a flow diagram illustrating one embodiment, provided purely by way of example, and not as a limitation, of the operating method of a mobile device according to the teachings of the present invention.

### DEFINITIONS AND CONVENTIONS

It should be noted that in the present detailed description, corresponding parts illustrated in the several figures are indicated with the same numerical references. The figures illustrate the object of the invention through schematic representations and not in scale.

### Mobile device

The term "mobile device" refers to a device for the maintenance of gardens, lawns, agricultural lands or crops. Preferably, the mobile device is a self-driving device.

By way of example, the mobile device may be a robotic lawnmower. Alternatively, the mobile device can be a small tractor suitable for mowing grass and/or for administering fertilizer.

In possible embodiments of the mobile device (especially if it includes battery powered moving means), a base is associated with the mobile device, designed to perform specific operations, such as for example charging or refueling operations.

### Control unit

The mobile device herein described can include at least one control unit intended to control operating conditions carried out by the same mobile device and/or to control the phases of the mapping method or of the operating method according to the present invention.

According to an alternative technical solution, the mobile device herein described may be associated, by means of one or more suitable nodes that interface on a communication network, with a control unit arranged in a remote position with respect to the mobile device (for example cloud-based) and responsible for controlling the operating conditions implemented by the mobile device and/or controlling the phases of the mapping method or of the operating method according to the present invention.

In both of the illustrated technical solutions, the control unit can comprise a single unit or can be made up of a plurality of distinct control units, depending on design choices and operational requirements.

The expression "control unit" means a type of electronic component which may comprise at least one of the following: a digital processor (CPU), an analog circuit or a combination of one or more digital processors with one or more analog circuits. The control unit can be "configured" or "programmed" to perform some phases: this can be performed in practice by any means that can allow to configure or program the control unit. For example, if a control unit comprises one or more CPUs and one or more memories, one or more programs can be stored in appropriate memory banks connected to the CPU or CPUs. The program or programs contain instructions which, when executed by the CPU or CPUs, program or configure the control unit to perform the operations described in relation to the control unit. Alternatively, if the control unit is or includes analog circuitry, then the circuit of the control unit can be designed to include configured circuitry, when in use, to process electrical signals in such a way as to carry out the steps relating to the control unit.

### Working area

The mobile device is configured to operate in a working area. The expression "working area" refers to an area defined in an outdoor environment, therefore a land such as a garden, a lawn, agricultural land or cultivated land. The working area can have homogeneous characteristics (for example a plot of land entirely used as a lawn) or heterogeneous characteristics.

The working area is a two-dimensional entity defined by at least one contour separating the working area from the adjacent areas. This contour can coincide at least in part with a physical obstacle (for example a wall or a hedge) that the mobile device cannot cross. Alternatively, this contour can coincide at least in part with a separation line of the working area with an adjacent installation (for example a road or a swimming pool) to which the mobile device should not have access.

The contour of the working area can coincide at least partly with the external perimeter of the working area or with a stretch of the external perimeter of the working area. Additionally, the contour of the working area can coincide with a perimeter within the working area or with a stretch of a perimeter within the working area, this occurring in particular when physical obstacles must be excluded from the working area (for example a tree or a flower bed) or installations (for example a swimming pool) arranged inside the working area.

### Global satellite navigation system

The expression "global satellite navigation system" refers to a system of geo-radiolocation and land, sea or air navigation, which uses a network of artificial satellites in orbit and pseudolites. The acronym "GNSS" is also often used for this system (from the English "Global Navigation Satellite System").

A global satellite navigation system is aimed at providing a geolocation service, or a geo-spatial positioning service with global coverage allowing specific electronic receivers to determine their geographical coordinates (longitude, latitude and altitude) on any point of the surface of the earth or atmosphere with an error of a few meters, processing radio frequency signals transmitted in line of sight by satellites.

In the present description and in the appended claims, reference will be made mainly, by way of explanatory example and not as a limitation, to the Global Positioning System (GPS) technology, of US derivation and currently fully operational. However, it should be noted that different technologies can be equivalently used for the purposes of the present invention, for example GLONASS technology (Russia), Galileo technology (Europe) and Beidou technology (China).

### DETAILED DESCRIPTION

### Mobile device

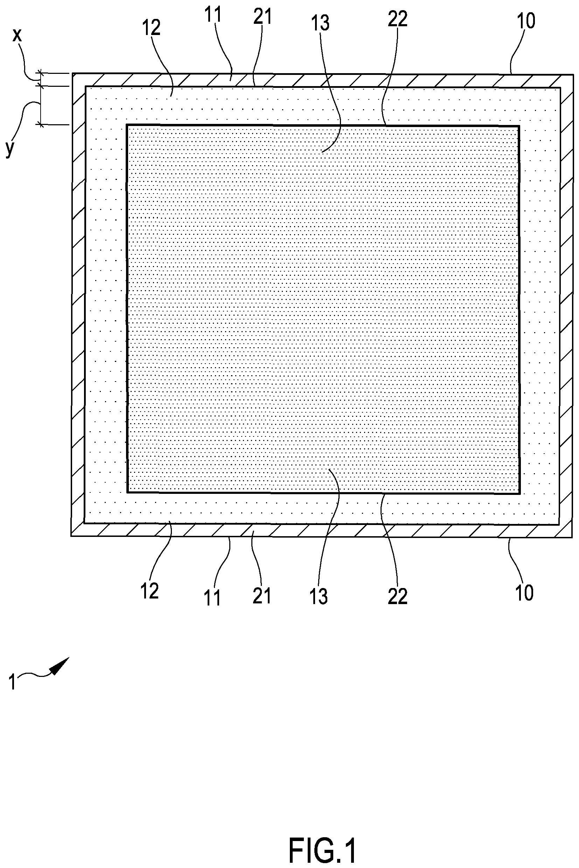

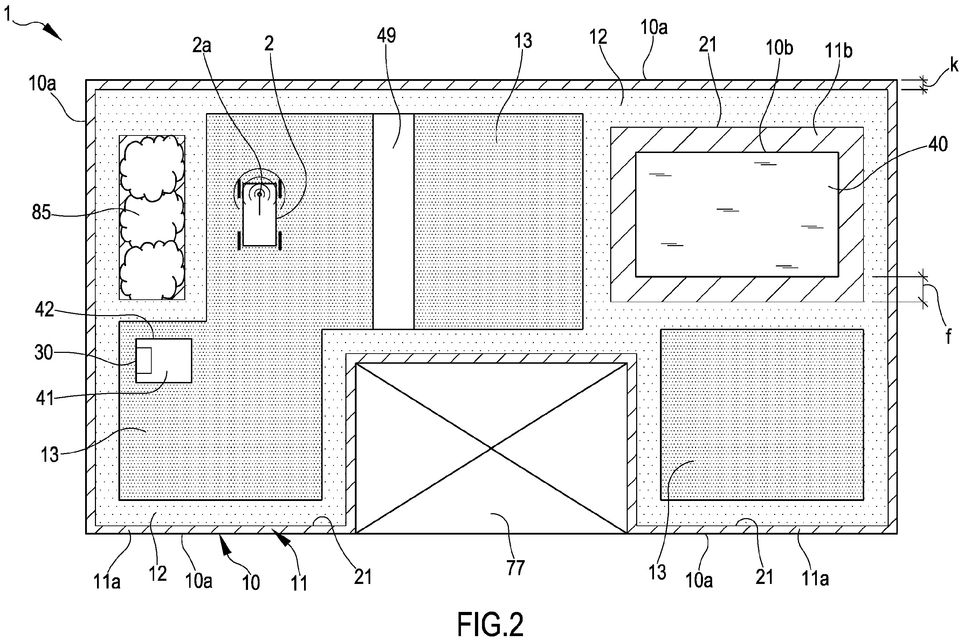

The term mobile device 2 refers to a device used for the maintenance of gardens, lawns, agricultural lands or crops, suited to operate in a working area 1 (shown schematically in Figures 1 and 2 attached to this description by way of example). In a preferred embodiment of the present invention, the mobile device 2 is a robotic lawnmower, whose payload is advantageously represented by a rotating blade.

The mobile device 2 comprises a supporting frame carrying moving means configured to determine the movement of the device itself at least within the working area 1. The moving means comprise at least one motor, of the electric or internal combustion type, connected to at least one drive wheel: in particular the mobile device 2 comprises three or more wheels of which at least one drive wheel, wherein said wheels are carried by the frame of the mobile device 2. If the mobile device is moved by an electric motor, the frame is configured to house at least one battery connected to the electric motor. This battery is in particular of the rechargeable type, whereby the mobile device comprises at least one connector aimed at allowing connection to a charging base.

The mobile device 2 also comprises a position detector carried by the frame and configured to determine the position of the mobile device 2 itself: this position can be provided in absolute terms, for example by means of geographical coordinates provided by a satellite detector (in particular of the GPS type), or in relative terms with respect to a reference element 30 (for example using beacon technology). In other words, the position detector is configured, when the device is in an operating condition, to provide a representative measurement of the position of the mobile device, at least when the latter is located within the working area 1. This measured position can, depending on the operating conditions and the place where the mobile device 2 is located, deviate from the actual position of the mobile device, defining a position measurement error: this error can assume random values as a function of a plurality of variables, such as the quality of the signal received by the position detector.

In the preferred embodiment, the position detector of the mobile device 2 comprises at least a satellite antenna (for example, according to the GPS technology) configured to provide the position of the device 2 in terms of absolute coordinates.

Alternatively, the position detector of the mobile device 2 comprises a system for measuring distance with respect to at least one reference element 30 positioned in a predetermined position inside or outside the working area. Knowing the position of this reference element 30 and the distance of the mobile device 2 from that element 30, it is possible to estimate or obtain the location of the mobile device 2 within the working area 1. This distance measuring system can comprise a signal emitter and a signal receiver positioned on the mobile device and/or on the reference element 30, such as for example a beacon or a time of flight meter.

According to the present invention, the mobile device 2 comprises, or is operatively associated with, means for estimating the uncertainty in detecting its position. By way of example, and not as a limitation, such means allowing the estimate of the uncertainty in the position of the mobile device 2 can comprise:
- a pair of antennas arranged on the mobile device 2 at a known distance, the uncertainty in position of the mobile device 2 being estimated by calculating the distance between the positions detected by the two antennas and comparing this calculated distance with the known distance between the antennas and/or
- an odometer and/or an inertial sensor and/or a vision system applied to the mobile device 2, the uncertainty in the position of the mobile device 2 being estimated by determining the distance traveled by the mobile device 2 in a time interval, calculating the distance between the positions detected at the beginning and end of this time interval and comparing this calculated distance with the distance traveled by the mobile device 2 and/or
- a receiver associated to the mobile device 2 and capable of receiving from an on-line service at least one signal providing a piece of information about the uncertainty in the detection of the position in correspondence of the geographical coordinates where the mobile device 2 is located.

The mobile device 2 can further comprise a rotating blade arranged at a bottom portion of the frame and configured to determine the mowing of the lawn or garden or land, the rotation of the rotating blade being caused by its activation (in continuous or selective mode) by means of a special actuation device (for example an electric motor). Alternatively or additionally, the mobile device 2 may comprise one or more cutting, drilling or plowing tools.

In a preferential embodiment, the mobile device 2 has a maximum size between 100 mm and 1000 mm, more particularly between 200 mm and 400 mm. However, the possibility of providing mobile devices 2 with alternative dimensions is not excluded.

A control unit is also provided and operationally connected at least to the moving means, such as for example the motor and the position detector. The control unit is therefore configured to receive the signal emitted by the position detector and, according to it, estimate an uncertainty in detecting this position. The control unit is equipped with a suitable computational capacity and is configured to perform, among other things, comparing operations. In addition, the mobile device may comprise a memory configured to record the working area 1 and a plurality of regions formed in the working area 1, in terms of geographical coordinates, as described below in greater detail.

The control unit is therefore configured to receive the position of the mobile device 2 from the detector and/or to estimate the uncertainty of this position by being operationally connected to the means designed for this purpose, to compare this uncertainty with a tolerance threshold relating to a region of the working area 1 and/or to determine the movement or arrest of the mobile device 2 as a function of this comparison.

In the preferential embodiment, the mobile device 2 is equipped with an autonomous or semi-autonomous driving system, wherein its movement is at least partly determined as a function of the region of the working area where it is located.

Furthermore, the mobile device 2 can comprise one or more proximity sensors carried by the support frame and configured to emit a signal representative of the presence or absence of an object or subject in proximity of the mobile device 2. These proximity sensors are in turn operationally connected to the control unit and mainly perform safety functions, in particular by stopping or deviating the mobile device 2 and/or stopping the relative payload when an unexpected obstacle (for example a cat) interferes with the trajectory covered by the mobile device 2.

The mobile device 2 can comprise further sensor devices, to determine parameters such as the state of health of the lawn (in particular by calculating the NDVI index) and/or the humidity of the soil/or the height of the grass.

In an advantageous embodiment of the present invention, one or more sensor devices are installed on board the mobile device 2, such sensor devices being capable of detecting whether the mobile device 2 is at least partially outside the working area 1 and/or if the mobile device 2 is in the vicinity of the contour 10 of the working area 1. In particular, these sensor devices comprise at least one spectrum sensor and/or at least one capacitive sensor. For example, such sensor devices can determine if the surface below the mobile device 2 or next to the mobile device 2 is covered by grass or if it is instead not covered by grass.

### Mapping method

The reference number 1 overall indicates a working area within which a mobile device 2, for example of the type as previously described, is configured to operate. The working area 1, shown schematically in the accompanying Figures 1 and 2 which represent possible examples, can be agricultural land, a lawn or a garden, and has a contour 10 defining internally an area pertaining to the mobile device 2. Figure 1 represents a working area 1 with a rather essential geometry (square-shaped), while Figure 2 represents a working area 1 with a sample geometry of a private garden (this geometry taking into account installations being adjacent to working area 1, represented here by a building 77, a flower bed 85, a driveway 49 and a swimming pool 40). The mobile device 2 is therefore configured to move and operate, for example mowing or implementing further actions on the ground, within this contour 10. The contour 10 therefore defines a limit beyond which, except for tolerances permitted by law, transit to the mobile device 2 is prohibited. The accompanying drawings show a contour 10 having a polygonal shape, wherein each stretch is defined by a straight segment defining a closed profile. Alternatively, the contour 10 can have a polygonal or curvilinear shape or a combination thereof.

The method provides for a phase defining this contour 10 in terms of geographic coordinates, for example absolute geographic coordinates preferably obtained from a satellite sensor, in particular of the GPS (Global Positioning System) type, or relative geographic coordinates with respect to a reference element 30. The step defining the contour 10 may comprise a phase wherein an operator carrying a GPS sensor (or more generally a satellite sensor) covers a predetermined trajectory and simultaneously records this trajectory in terms of geographical coordinates detected by the GPS sensor. In other words, an operator can record his geographic position while traveling along this trajectory to define the contour 10. The GPS sensor carried by the subject can be included in a remote device carried by the operator himself, such as for example a smartphone.

Alternatively, the coordinates associated with the contour 10 can be detected by means of a triangulation algorithm of a GSM telephone signal. As before, an operator can follow the desired trajectory bringing along a phone device, such as a mobile phone, so as to determine the position of the operator on the basis of the telephone signal and then record the position of the subject along this trajectory to define the contour 10 in terms of geographic coordinates.

In a further embodiment, a GPS sensor (or more generally a satellite sensor) is installed on board the mobile device 2 which is configured to follow an operator, while the latter follows this trajectory, and is further configured to reproduce as closely as possible the trajectory traveled by the operator. For this purpose, the mobile device 2 presents tracking means of the operator, which may include a radio-frequency device apt to implement a wireless connection, for example, a connection according to the Bluetooth technology, between the mobile device 2 and a remote device carried by the operator, while the latter follows the trajectory which he intends to define as the contour of the working area for the mobile device 2. Alternatively, such tracking means may include an optical sensor (e.g. a camera) configured to let the mobile device 2 recognize the operator and follow his movements along the trajectory that he intends to define as contour of the working area for the mobile device 2. The mobile device 2, being in this embodiment equipped with a GPS sensor, is capable of detecting the geographic coordinates of the trajectory traveled by following the operator and memorizing these geographic coordinates as the coordinates of the contour of the working area.

The aforesaid method for contour definition (which makes use of tracking means installed on board the mobile device 2) is particularly appreciable as it achieves an optimal combination of simplicity of the process and precision in defining the contour of the working area. In an alternative embodiment which is not preferred, but in any case possible within the scope of the present invention, a GPS sensor (or more generally a satellite sensor) is installed on board the mobile device 2 which is configured to be maneuvered, during the installation process, by operator from a remote location, for example via a joystick designed for this purpose.

In a further embodiment, the definition phase of the contour 10 can be carried out by using a virtual map or a satellite image on which the operator can trace the contour 10 itself. For example, such virtual map or such satellite image can be generated by means of a specific service of search and of viewing of terrestrial maps, for example the Google Maps service (owner of the company Google Inc.). This embodiment also stands out because it is capable of achieving an optimal combination of simplicity of the process and precision in defining the contour 10 of the working area 1. In fact, for the definition of the working area, it is sufficient to trace the contour on the virtual map or on the satellite image, such tracing determining the association of satellite coordinates for each portion of the drawn contour 10. The satellite coordinates of the traced contour on the virtual map or on the satellite image are then stored by the control unit as geographical coordinates of the contour 10 of the working area 1 of the mobile device 2. In a preferential embodiment, this virtual map or satellite image is obtainable by using a remote device, such as for example a smartphone, a computer or a tablet, capable of communicating with the control unit of the mobile device 2 via a communication network, in order to transmit to this control unit, inter alia, the satellite coordinates of the contour 10 of the working area 2, once defined by means of the specific tracing phase.

The contour 10 may define an outer perimeter of the working area 1, whose length depends on the characteristics of the working area 1 itself. Preferably but not limited to, the overall surface of the working area is in the range of tens or hundreds of square meters, but it can also be in the range of hectares or more.

The mapping method according to the present invention can include, in addition to the step of defining the contour 10, also the step of defining one or more reference paths for the mobile device 2. Reference path means a path that the mobile device 2 can preferably travel to move within the working area 1 and/or to reach predetermined goals.

In a first example, a reference path may include a path crossing the driveway 49 when the mobile device 2 needs to move from the left portion of the working area 1 to the right portion or vice versa. In a second example, a reference path may include a path for reaching the charging base when the mobile device 2 needs to recharge its batteries. In a third example, a reference path may include a path for reaching a tap connected to the water network when the mobile device 2 needs to be washed. In a fourth example, a reference path may include a path to reach a garage when the mobile device 2 needs to be loaded onto a vehicle.

The definition of a reference path for the mobile device 2 can be carried out with the same methods adopted for the definition of the contour 10 (i.e., for example by following an operator who moves along a predetermined trajectory or by tracing a path on a virtual map or on a satellite image). Advantageously, the definition of a reference path for the mobile device 2 can comprise the recognition and/or positioning of reference objects along the reference path. In this way, the mobile device 2 will also be able to follow the reference path by moving from one reference object to the next.

The mapping method further comprises a step of obtaining, from the working area 1, a first region 11 interposed between the contour 10 and a first boundary 21 placed as a demarcation of the first region 11. The first region 11 extends inwardly from the contour 10 towards the working area 1 until the first boundary 21 defining a limit of the first region 11. In particular, this first region 11 can extend from the contour 10 to the first boundary 21 by a measure (fixed or variable), advantageously comprised between 50 mm and 1000 mm, more particularly comprised between 100 mm and 400 mm, wherein this measure represents the distance calculated between the contour 10 and the first boundary 21. The method provides to assign to the first region 11 a first tolerance threshold of the position estimate of the mobile device 2: this tolerance threshold defines a limit about the maximum permissible error in the detection of the position of the mobile device 2 when the mobile device is located in the first region 11 or is deemed to be in the first region 11. This tolerance threshold can be expressed in terms of size: for example, it can be expected that the error in the detection of the position of the mobile device 2 does not exceed a predetermined threshold value, this threshold value being for example less than 300 mm, in particular less than 200 mm, even more particularly between 50 mm and 120 mm.

In a preferred embodiment, the contour 10 is divided into at least a first stretch 10a associated with a first parameter representative of the type of the contour 10 in correspondence of this first stretch 10a, and a second stretch 10b associated with a second parameter representative of the typology of the contour 10 in correspondence with this second stretch 10b. Therefore, the first region 11 comprises a first portion 11a and a second portion 11b, wherein the first portion 11a extends between the first stretch 10a and the first boundary 21, while the second portion 11b extends between the second stretch 10b and the first boundary 21. In this embodiment, the distance between the first stretch 10a and the first boundary 21 is different from the distance between the second stretch 10b and the first boundary 21, defining an extension of the first portion 11a of the first region 11 different from the extension of the second portion 11b of the first region 11. Figure 2 shows, by way of example, a second portion 11b of the first region 11 having a greater extension than the extension of the first portion 11a of the first region 11. In particular, Figure 2 shows that the distance between the second stretch 10b and the first boundary 21 is greater than the distance between the first stretch 10a and the first boundary 21.

This preferential embodiment is extremely advantageous, since it permits, among other things, to adapt the extension of the first region 11 to the type of installation adjacent to the working area 1 and therefore to the danger of a possible trespassing of the mobile device 2 in such adjacent installation. It is not, therefore, by chance that in the representation shown in Figure 2, the portion of the first region 11 with a greater extension (i.e. the second portion 11b) is adjacent to the pool 40, because a possible trespassing of the mobile device 2 into the pool 40, besides being likely to cause irreversible damage, would seriously harm the safety of people bathing in the pool 40. Always in the representation shown in Figure 2, the portion of the first region 11 with a minor extension is adjacent to the flower bed 85, because a possible trespassing of the mobile device 2 in the flower bed 85, would be at the most likely to bring the mobile device 2 in contact with the shrubs of the flower bed 85, such contact being unlikely to damage the mobile device 2 or the shrubs, and what is more being possibly be detected by a proximity sensor, when present on the mobile device 2. Finally, it should be noted that in the representation shown in Figure 2, the first region 11 is not adjacent to the driveway 49, since the operator during the installation of the mobile device 1 evidently considered as unproblematic any crossings of the driveway 49 of the mobile device 2, for example to switch, during operation, from the left side to the right side of the working area or vice versa.

The parameter representative of the type of the contour 10 is apt to define, in quantitative terms, this extension: in particular, this parameter may be associated with a stretch of the contour 10 traveled by the operator during the phase of determining the contour 10 itself. The operator can indicate the type of the contour 10 by associating a representative parameter while traveling along the trajectory defining the contour 10. The association step can take place by means of an acoustic, gestural, tactile, visual or chromatic command detected by the mobile device 2 or by a remote device, for example a smartphone or a tablet, carried by the operator. This parameter can be representative of a risk factor if the mobile device moves too closely to a predetermined stretch of the contour 10. For example, if the working area 1 includes a high risk region, such as for example the swimming pool 40 delimited by the second stretch 10b as shown in figure 2, a representative parameter is associated with this second stretch 10b of the contour 10 of the said risk zone, such that the extension f of the second portion 11b of the first region 11 associated with this second stretch 10b is greater than the extension k of the first portion 11a of the first region 11 associated with the first stretch 10a of the contour 10.

Similarly, figure 2 shows a first portion 11a of the first region 11 having a relatively limited extension. In this case, the representative parameter of the first stretch 10a associated with this first portion 11a can indicate the presence of a perimeter wall delimiting the working area 1: consequently the risk or danger potentially determined by the approach of the mobile device towards this first stretch 10a is reduced if compared to the one associated with the second stretch 10b. This risk assessment acquires particular relevance in light of the uncertainty in assessing the position of the mobile device 2.

Within the mapping method according to the present invention, a suitable installation method can be provided in order to let the operator associate a portion of the contour 10 of the working area 1 to the representative parameter of this stretch. It is important to underline that this installation method itself has inventive contents, since it is also applicable to different mapping methods and achieves some advantageous technical effects of its own (in particular the effect of imparting to the installation procedure of the mobile device 2 a flexibility functional for maximizing the safety of the mobile device 2 and consequently the effect of reducing the risks associated with the subsequent operation of the mobile device 2). Therefore, it can be reasonably assumed that the installation method described below presents all the conditions for being itself an invention.

The installation method provides that the operator can associate at least a stretch of the contour 10 of the working area 1 of the mobile device 2 with a parameter representative of this stretch. In particular, this representative parameter is in relation with the estimated hazard occurring in the event of a trespassing of the mobile device 2 from the working area 1 in correspondence with this stretch and it is therefore further in relation with the characteristics of the contour 10 in correspondence with this stretch (if in particular coinciding with a physical obstacle such as a wall or a hedge or if instead purely virtual and therefore not coinciding with any physical obstacle) and/or with the characteristics of the installation adjacent to the contour 10 in correspondence with this stretch (swimming pool, road, and so on).

In the embodiment of the installation method which makes use of tracking means on board the mobile device 2, the operator, having traveled a predetermined stretch of the contour 10 of the working area 1 and having been followed by the mobile device 2, provides to communicate to the control unit of the mobile device 2 this parameter suitably coded. Once the value of the representative parameter of a stretch of the contour 10 is known, the control unit of the mobile device 2 consequently determines the extension of the first region 11 (and any further subsequent regions) adjacent to this stretch on the basis of this value of the representative parameter, determining in particular a comparatively considerable extension when this parameter is representative of a potentially very critical contour stretch and a comparatively small extension when this parameter is representative of a potentially not very critical contour stretch.

If the mobile device 2 includes a radio frequency device (for example a device according to Bluetooth technology) to communicate with a remote device, the operator, after traveling the stretch, provides, by means of a specific application running on the mobile device, to select the type of contour in correspondence with the traveled stretch among a plurality of available options such as "wall", "pool edge", "road", "hedge", "flower bed", and others. The control unit of the mobile device 2, having received and interpreted the operator's selection, provides to associate the value of the representative parameter corresponding to this selection to the stretch traveled and consequently provides to determine the extension of the first region adjacent to the stretch traveled.

If the mobile device 2 includes an optical sensor (for example a camera), the operator, after traveling the stretch, provides to perform a predefined gesture which is captured by the optical sensor, which then allows the control unit of the mobile 2 to interpret this gesture and consequently to associate the value of the representative parameter corresponding to this gesture to the stretch traveled. Finally, the control unit determines the extension of the first region adjacent to the stretch travelled according to the value of the representative parameter.

It is also possible to provide that the mobile device 2 comprises a microphone to collect vocal commands given by the operator. In this case, the operator, once he has traveled the stretch, proceeds to pronounce a predefined keyword (for example "wall!" or "swimming pool!") which is picked up by the microphone. Subsequently, the control unit of the mobile device 2 associates to the traveled stretch the value of the representative parameter corresponding to this keyword. Finally, the control unit determines the extension of the first region adjacent to the stretch traveled, according to value of the representative parameter.

If, on the other hand, the definition of the contour 10 takes place by recording a track on a virtual map or on a satellite image, the installation method provides that the operator can characterize any stretch of that track. For example, the operator can trace the potentially very critical stretch of the track (i.e. the potentially very critical stretch of the contour 10 of the working area 1 of the mobile device 2) with red lines and the potentially not very critical stretch of the track (that is, the potentially not very critical stretch of the contour 10 of the working area 1 of the mobile device 2) with blue lines. The control unit of the mobile device 2 interprets the characterization (for example the colouring) attributed by the operator to each stretch of the track stored on the virtual map or on the satellite image and consequently associates to each stretch of the track the value of the representative parameter corresponding to this characterization. Finally, the control unit determines the extension of the first region adjacent to each stretch of the track (i.e. each stretch of the contour 10 of the working area 1 of the mobile device 2) on the basis of the corresponding value of the representative parameter.

The mapping method further comprises the definition of a second region 12 extending inwardly from the first boundary 21 to the working area 1, this second region 12 being associated with a second tolerance threshold different from the first tolerance threshold of the first region 11. The second tolerance threshold is greater than the first tolerance threshold. In other words, the second region 12 allows the mobile device 2 to have a lower precision in detecting or estimating its position with respect to what is required in the first region 11. By way of example, if in the first region 11 a maximum tolerance required in detecting or estimating the position of the mobile device 2 is of less than 200 mm, within the second region 12 a maximum tolerance of less than 500 mm may be required (the second tolerance threshold associated with the second region 12 being therefore between 200 mm and 500 mm). As shown in Figure 2, the extension of the second region 12 turns out to be greater than an extension of the first region 11 in correspondence of the same stretch of the contour 10. In the representation of Figure 1, wherein it is assumed that all the stretches of the contour 10 of the working area 1 have the same characteristics, the extension x of the first region 11 is advantageously minor than the extension y of the second region 12.

As previously described, a single parameter representative of the first or second stretch 10a, 10b of the contour 10 can also be associated with the extension of the second region 12 from the first boundary 21 to the inner part of the working area 1. In other words, the parameter representative of the first stretch 10a of contour 10 defines an extension of the first portion 11a of the first region 11 and a corresponding extension of a first portion 12a of the second region 12, wherein these extensions are different from each other. In particular, the extension of the first portion 11a of the first region 11 turns out to be minor than the extension of the first portion 12a of the second region 12. Similarly, the parameter representative of the second stretch 10b of contour 10 defines an extension of the second portion 11b of the first region 11 minor than the extension of a corresponding second portion 12b of the second region 12. In a preferential embodiment, the ratio between the extension of the second region 12 and the extension of the first region 11 remains constant as the value of the corresponding representative parameter changes.

The first boundary 21, marking out the first region 11 and the second region 12 and separating the region where the first tolerance threshold is effective from the region where the second tolerance threshold is effective, can be defined by a line having theoretically infinitesimal thickness or it can be defined by a hysteresis threshold or by a hysteresis band.

The method can further comprise a step of determining at least a third region 13, shown schematically in Figures 1 and 2, obtained in the working area 1 and extending from a second boundary 22, marking out the second region 12 and the third region 13, towards the inside of the working area 1. The third region 13 is given a respective third tolerance threshold for estimating the position of the mobile device 2, wherein this third threshold defines a limit about the maximum tolerable uncertainty of the detection or of the estimate of the position of the mobile device 2 within the working area 1. In particular, the third tolerance threshold is greater than the second tolerance threshold. The third region therefore represents a zone with low potential risk, such that a not particularly precise detection or estimate of the position of the mobile device 2, or at least less precise than required when the mobile device 2 is positioned in the first region 11 or in the second region 12, is not considered as a potential factor of risk or danger.

If the working area 1 includes only a first region 11, a second region 12 and a third region 13, the latter extends from the second boundary 22 to completely cover the internal region of the working area 1, as schematically shown in the accompanying Figures 1 and 2. However, this does not rule out the possibility of providing further regions, for example a fourth region inside the third region 13 and so on, to define a plurality of regions each having a predetermined tolerance threshold, wherein the predetermined tolerance thresholds increase progressively starting from contour 10 towards the inner part of the working area 1. Advantageously, an increase in the extension of the regions can also be envisaged starting from the contour 10 towards the inside of the working area 1.

Similarly to what has been previously described and in case there is a fourth region delimiting the third region 13, the representative parameter of the first or second stretch 10a, 10b of the contour 10 can further define the extension of this third region 13, measured as a distance between the second boundary 22 and a third boundary between the third and fourth region. If instead the working area 1 includes only the first, second and third regions, the extension of the third region 13 towards the inner part of the working area 1 is defined in such a way as to determine full coverage of the internal portion of the working area 1.

To sum up what described above, the mapping method, in accordance with a nonlimiting embodiment illustrated in particular in Figures 1 and 2, can determine a first region 11 of the working area 1 of the mobile device 2 extending between the contour 10 and a first boundary 21, a second region 12 of the working area 1 of the mobile device 2 developing between the first boundary 21 and the second boundary 22 and a third region 13 of the working area 1 of the mobile device 2 developing from the second boundary 22 towards the inside of the working area 1, wherein each of these regions has a respective tolerance threshold increasing from the external contour 10 towards the inside of the working area 1.

The mapping method according to the present invention can further comprise a step defining the position of a reference element 30 within the working area 1 and advantageously a step of definition of an area of influence 41 delimited by an auxiliary boundary 42, and adjacent to this reference element 30. The reference element 30, as previously mentioned in relation to the mobile device 2, defines a fixed base with respect to which it is possible to determine the position of the mobile device 2. Additionally, the fixed base may comprise a dock station for recharging the battery of the mobile device 2, being in this case configured to receive the mobile device 2 in a predetermined position and according to a predetermined orientation. Communication means are advantageously provided on board the mobile device 2 and the reference element 30, in order to allow the exchange of signals between the mobile device 2 and the reference element 30.

The provision of the area of influence 41 is functional to guarantee an optimal approach of the mobile device 2 to the reference element 30, in particular in order to carry out the battery recharging operation. Since the detection of the position of the mobile device 2, as it generally happens within the working area 1, is not particularly suitable for ensuring the required position and orientation required so that battery charging is enabled, once the mobile device 2 is located in the area of influence 41, the control of the position and orientation of the mobile device 2 takes place according to specific methods which can include the exchange of signals with the reference element 30.

The reference element 30 can comprise a position detector, for example a satellite detector (in particular of the GPS type) configured to receive a signal representative of its position in terms of geographical coordinates. Alternatively, the mapping method can comprise a step defining the position of the reference element 30 by registering the position of the mobile device 2 during a recharging operation thereof at the fixed base. In other words, when the mobile device 2 is arranged in correspondence with the reference element 30 during a recharging operation, the position of the mobile device 2 is detected by the on-board position detector and stored in memory, consequently allowing the definition of the position of the reference element 30.

If the mapping method provides for the definition of the position of the reference element 30, it is possible to define the contour 10, the first boundary 21, the area of influence 41 and the relative auxiliary boundary 42 by means of relative coordinates with respect to the element of reference 30. In particular, the position of the mobile device 2 can comprise information about a distance and an angle of the mobile device 2 itself with respect to the reference element 30. In greater detail, the reference element 30 and/or the mobile device 2 can comprise one or more sensors, for example a beacon, configured to detect or estimate their mutual distance, just as they can comprise one or more sensors, configured to detect or estimate mutual orientation.

Finally, the mapping method according to the present invention can comprise a step of definition of at least one reference path for the mobile device 2, this step being able to take advantage of any of the modalities previously described in relation to the definition of contour 10 (for example by following an operator along a predetermined trajectory or by recording a path on a virtual map or on a satellite image). This reference path may comprise a preferred path available to the mobile device 2 during its operation within the working area 1 (for example the path to be followed to cross the driveway 49 and therefore to move from the left part to the right part of the working area or vice versa). Alternatively, this reference path may comprise an optimal path available to the mobile device 2 to reach a predetermined destination within the working area 1 or adjacent to the working area 1 (for example a charging dock or a washing area or a garage).

The reference path is defined by absolute geographic coordinates or by relative coordinates and is suitably stored to be available to the control unit of the mobile device 2.

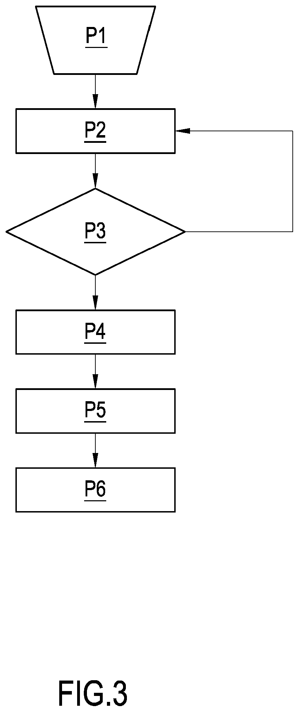

The flow chart of Figure 3 represents an embodiment of the mapping method according to the present invention, wherein:
- block P1 represents a definition step (by means of absolute coordinates, such as satellite coordinates, in particular GPS coordinates, or alternatively by means of relative coordinates) of said at least one contour of the working area of the mobile device consisting of the external perimeter of the working area. The definition of the external perimeter can take place by using means for following an operator, installed on board the mobile device, or alternatively by using a virtual map or a satellite image displayed by a remote device (as previously described in detail);
- block P2 represents a definition step (by means of absolute coordinates, such as for example satellite coordinates, in particular GPS coordinates, or alternatively by means of relative coordinates) of a possible installation (swimming pool, flower bed, fountain, and so on) or of a possible physical obstacle in the working area, this definition being able to take place in the same way as in the previous block P1. Alternatively, if a virtual map or a satellite image displayed by a remote device are used, it is possible to adopt predefined icons (generic obstacle icon, swimming pool icon, flower bed icon, fountain icon, and so on) which are positioned on the virtual map or satellite image in accordance with their actual position in the working area;
- block P3 represents a verification step with the operator being asked to confirm whether all the installations and all the physical obstacles that may be present in the working area have been defined. In case of confirmation, it is possible to move to the next block P4, while without this confirmation it is necessary to return to the previous block P2;
- block P4 represents an elaboration step of the first region, of the second region and of the further regions into which the working area is intended to be subdivided, on the basis of the external perimeter, of the installations and of the physical obstacles defined in the previous blocks P1 and P2, and a subsequent step of assigning a tolerance threshold to each region;
- block P5 represents a step of map creation of the working area on the basis of the elaboration and the allocation mentioned in the previous block P4 and the subsequent step of memory saving of such map which can then be used to manage the operation of a mobile device in the working area;
- block P6 represents a step of association of the map created in block P5 to a unique code for checking the integrity of the data and the subsequent step of memory saving of this unique code. Advantageously, the unique code is determined by using CRC technology ("Cyclic Redundancy Check").

### Operating method

The operating method of a mobile device, for example a mobile device 2 according to the previous description, inside the working area 1 defined by the mapping method previously described, is described below.

The operating method according to the present invention provides a step of detection of the position of the mobile device 2 within the working area 1 and a step of estimating of the uncertainty of its position. In particular, this step may involve the determination of the position of the mobile device 2 in terms of absolute coordinates detected by a satellite sensor (preferably of GPS type installed on board the mobile device 2), or in terms of relative coordinates with respect to the reference element 30.

The operating method therefore provides for the identification of the region where the mobile device 2 is located. In particular, the method provides for verifying if the mobile device 2 is located within the first region 11, the second region 12, the third region 13 (if provided) or of the further regions (if provided) obtained in the working area by means of the previously described mapping method.

The operating method can therefore provide for comparing the uncertainty detected in the position of the mobile device 2 with the tolerance threshold associated with the region within which the mobile device 2 is located and/or with tolerance thresholds associated with the adjacent regions of the working area 1. If the uncertainty detected in the position of the mobile device 2 is greater than the tolerance threshold of the region wherein the mobile device is located, the method advantageously provides for comparing the uncertainty with the tolerance threshold of a region positioned more inside the working area 1 (being the tolerance threshold of a predetermined region generally minor than the tolerance thresholds of the regions obtained within this predetermined region).

Given a certain scheduling of the mobile device 2, so that during its operation the mobile device 2 must provide for the maintenance of a predetermined portion of the working area 1, it is advisable that the mobile device 2 should operate in the region whose tolerance threshold is immediately greater than the estimated uncertainty of the position of the mobile device 2. Assuming that the scheduling of the mobile device 2 requires that the mobile device 2 should provide for the maintenance of the entire working area 1, it is advisable that the mobile device 2 should operate in the first region 11 when the position of the mobile device 2 is most reliable, i.e. when the uncertainty in the estimated position of the mobile device 2 is minor than the first tolerance threshold, i.e. the tolerance threshold assigned in the mapping method to the first region 11.

Therefore, if the mobile device 2 is detected to be located within the first region 11 and the uncertainty in detecting the position of the mobile device 2 has been estimated to be minor than the first tolerance threshold, the method provides for enabling the mobile device 2 to operate in the first region 11 of the working area 1, as long as the estimated uncertainty remains lower than the first tolerance threshold or as long as the mobile device 2 has completed the maintenance of the first region 11. In conjunction with the most reliable detection of the position of the mobile device (i.e. when an uncertainty lower than the first tolerance threshold has been estimated), it can further be provided that, having been detected in a region of the working are 1 different from the first region 11 (for example in the second region 12), the mobile device 2 is allowed to enter the first region 11 and therefore to operate in the first region 11.

On the contrary, if the device has been detected to be located within the first region 11 and the uncertainty in the measurement of the position has been estimated to be greater than the first tolerance threshold, the operating method provides for comparing the uncertainty previously estimated with the second tolerance threshold, and then possibly with the third tolerance threshold, that is to say with the tolerance thresholds assigned in the mapping method respectively to the second region 12 and third region 13. If the uncertainty estimated in the measurement of the position of the mobile device 2 is minor than the second tolerance threshold, the method can provide for controlling the movement of the mobile device 2 leaving the first region 11 through the first boundary 21 to position itself within the second region 12. Alternatively, if the uncertainty estimated in the measurement of the position of the mobile device 2 is greater than the second tolerance threshold but minor than the third tolerance threshold, the method can provide for controlling the movement of the mobile device 2 towards the third region 13, first by crossing the first boundary 21 and then the second boundary 22.

If, on the other hand, the uncertainty in detecting the position of the mobile device 2 is minor than the first tolerance threshold provided by the first region 11, the method provides for allowing the mobile device 2 to remain within the first region 11 to complete the maintenance operations of the land. Please note that, if the uncertainty in the detection of the position of the mobile device 2 is minor than the first tolerance threshold, it is also consequently minor than the second tolerance threshold and the third tolerance threshold (and in general minor than the tolerance threshold assigned to any region of the working area 1), thus the method can provide for allowing the free movement of the mobile device 2 within the entire working area 1 to complete its maintenance operations of the land.

If in the mapping method a plurality of regions have been obtained from the working area 1 according to a pattern such that, given an n-th region, this n-th region extends internally to the (n-1)-th region and simultaneously the (n+1)-th region extends internally to the n-th region and if to each region of this plurality a respective tolerance threshold regarding the uncertainty in the position of the mobile device 2 in the region has been assigned, according to a sequence whereby the tolerance threshold of the n-th region is greater than the tolerance threshold of the (n-1)-th region and is minor than the tolerance threshold of the (n+1)-th region, the operating method according to the present invention provides that the mobile device 2 is allowed to operate in a region of such plurality whose tolerance threshold is greater than the uncertainty in the detected and/or estimated position of the mobile device 2 (being possibly moved there from a different region of the working area 1, in particular from a region whose tolerance threshold is minor than the uncertainty in the detected and/or estimated position of the mobile device 2). Advantageously, the mobile device 2 is allowed to operate in the region of this plurality whose tolerance threshold is immediately greater than the uncertainty in the detected and/or estimated position of the mobile device 2.

The operating method according to the present invention advantageously provides that, once the region of the working area 1 wherein the mobile device 2 is allowed to operate has been determined, the movement of the mobile device in this region of the working area 1 takes place by considering the scheduling of the mobile device 2 (for example, with special reference to the working area shown in figure 2, a scheduling can include the maintenance of the portion of the working area to the left of the driveway 49 on a first day, and the maintenance of the portion of the working area to the right of the driveway 49 on a second day) and optimization criteria, aimed at minimizing the distance traveled by the mobile device 2 and consequently reducing the consumption of resources (in particular electricity or fuel) by the mobile device 2 .

According to the operating method described in the present invention, the detection and/or estimate of the position of the mobile device 2 in the working area 1 and of the uncertainty in the position of the mobile device 2 take place on a regular basis. In particular, it can be provided that the detection and/or estimate of the position of the mobile device 2 in the working area 1 and of the uncertainty in the position of the mobile device 2 are carried out with a predetermined frequency, whose determination can depend on the advancement speed of the mobile device (for example, a detection and/or estimate per tenth of a second or a detection and/or estimate per second).

If one or more sensor devices are installed on board the mobile device 2, capable of detecting whether the mobile device 2 is at least partially outside the working area 1 and/or if the mobile device 2 is near the contour 10 of the working area 1, discerning whether the surface below the mobile device 2 or close to the mobile device 2 is covered with grass or if it is instead not covered with grass, the operating method can advantageously provide that, near the contour 10 (in particular in the first region 11), the navigation of the mobile device 2 is assisted by these sensor devices. In fact, these sensor devices guarantee high reliability in preventing the mobile device 2 from crossing the contour 10 exceeding the limits set by the regulations. In order to allow these sensor devices to operate at their best, control strategies of the mobile device 2 can be adopted, specifically for the first region 11, for example strategies providing a prevalent direction of movement of the mobile device 2 substantially parallel to the contour 10 and/or a slow forward speed of the mobile device 2. On the contrary, in more central and therefore less critical regions of the working area 1, the use of these sensor devices can be suspended.

In accordance with the present invention, it is possible to provide similar managing modes of the mobile device 2 in all regions of the working area 1, according to which sensor devices (such as for example spectral sensor devices or capacitive sensor devices) capable of discerning whether the surface below the mobile device 2 or close to the mobile device 2 is covered with grass or if it is not covered with grass, constantly play an auxiliary role in ascertaining the position of the mobile device 2 within the working area 1.

In accordance with the present invention, it is also possible to provide managing modes of the mobile device 2 which instead depend on the region of the working area 1 wherein the mobile device 2 is positioned. For example, a managing mode can be adopted whereby in the inner regions of the working area 1 sensor devices (such as for example spectral sensor devices or capacitive sensor devices) able to discern whether the surface below the mobile device 2 or close to the mobile device 2 is covered with grass or if it is instead not covered with grass, play an auxiliary role in determining the position of the mobile device 2 within the working area 1, while in the first region 11 the same sensor devices further perform the role of contributing to the movement of the mobile device 2, detecting the contour 10 and thus allowing the control unit of the mobile device 2 to impose a direction of advancement of the mobile device 2 substantially parallel to the contour 10.

Advantageously, the mobile device 2, when in motion, disposing of appropriate sensor devices, can acquire information about the working area 1 or detect parameters regarding the working area 1. Such information and/or parameters are suitably associated to respective positions of the mobile device 2 in the working area 1, so that they can generate representations (also viewable on remote devices), for example of the state of health of the lawn and/or of the humidity of the soil and/or of the grass height. In particular, providing the mobile device 2 with a spectral sensor, it is possible to calculate the NDVI ("Normalized Difference Vegetation Index") at each detected position of the mobile device 2 and produce a specific representation.

The operating method according to the present invention can also provide for a safety measure such that, if the uncertainty in the position of the mobile device 2 happens to be greater than both the tolerance threshold in the region where the mobile device 2 has been identified to be positioned, and the threshold of any region of the working area 1, the mobile device 2 is stopped. The operating method in this circumstance can also provide for the arrest of the payload (for example the rotating blade) of the mobile device 2. In a possible simplified alternative, this safety measure can provide that the mobile device 2 can be stopped if the uncertainty in the position of the mobile device 2 is greater than both the tolerance threshold of the region where the mobile device 2 has been detected, and the tolerance threshold of the innermost region immediately next. For example, if the mobile device 2 has been detected to be located in the first region 11, the arrest of the mobile device 2 occurs if the uncertainty in the position of the mobile device 2 is greater than both the first tolerance threshold and the second tolerance threshold. The arrest of the mobile device 2 is therefore determined until the uncertainty of its position becomes adequate, in particular minor than the tolerance threshold of the region where the mobile device 2 is positioned or the tolerance threshold of the innermost region immediately adjacent or of the tolerance threshold of at least any region of the working area 1.

The operating method according to the present invention, if the mobile device 2 has been detected to be located within the area of influence 41 defined by the reference element 30, also advantageously provides for the determination of the position of the mobile device 2 with respect to the reference element 30. For this purpose, the reference element 30 and the mobile device 2 can comprise one or more sensors, for example a beacon, configured to estimate their mutual distance. In this way, the navigation of the mobile device 2 is performed by these sensors in order to allow the mobile device 2 to approach the reference element 30, useful for example when the mobile device 2 approaches and is coupled to the charging base when the latter coincides with the reference element.

The position of the mobile device 2, when the latter is located within the area of influence 41, can be obtained both from the information deriving from the satellite detection device, and from the information obtained from the beacon sensor of the reference element 30, this redundancy allowing to reduce the uncertainty in estimating the position of the mobile device 2, and then an optimal coupling between the charging base and the mobile device 2.

If the mapping method has included the definition of one or more reference paths for the mobile device 2, the operating method of the mobile device 2 according to the present invention may include the phase of following a path of interest among the reference paths defined and stored during the mapping method (for example, in case the mobile device 2 needed to be loaded on a vehicle, the path of interest followed by the mobile device 2 is the reference path leading to the garage). In order to be able to reach and follow the path of interest, the mobile device 2, having detected its position within the working area 1, determines the position of the nearest point of the path of interest, and then moves up to this point.

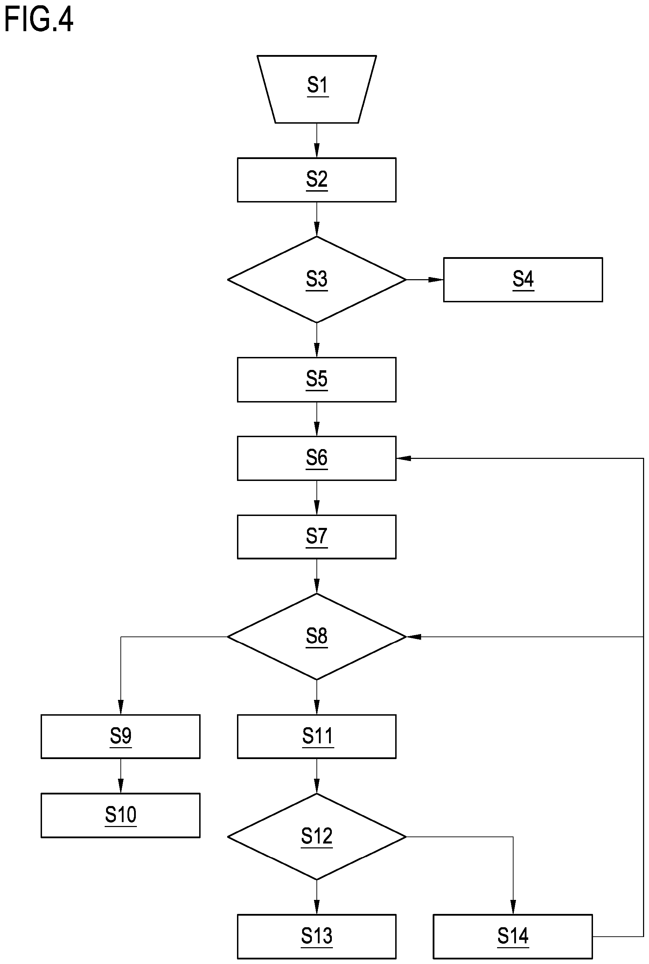

The flow chart of Figure 4 represents an embodiment of the operating method according to the present invention, wherein:
- block S1 represents an activation step of the mobile device;
- block S2 represents a reading step of the map of the working area and a subsequent calculation step, using the CRC ("Cyclic Redundancy Check") technology, of the univocal code associated with it;
- block S3 represents a coherence check step wherein the univocal code calculated in the previous block S2 is compared with the CRC code determined during the previous mapping. When this consistency check gives a negative result, this indicates that the map created during the mapping has been altered and therefore one passes to block S4. Alternatively, one passes to block S5;
- block S4 represents a step of deactivation the mobile device, signaling the error encountered and the need to perform a new mapping of working area;
- block S5 represents an enabling step of the mobile device to carry out maintenance on the working area according to the planned scheduling, for example to carry out a mowing operation;
- block S6 represents a step of detection of the position of the mobile device in the form of absolute geographical coordinates (by means of a satellite detection system) or in the form of relative coordinates with respect to a reference element and a subsequent step for estimating the uncertainty in detecting the position of the mobile device in the working area;
- block S7 represents a step of comparison between the uncertainty in the detection of the position of the mobile device and the tolerance threshold of the region of the working area where the mobile device has been detected to be located;
- block S8 represents a decisional step on the basis of the comparison mentioned in the previous block S7. If the uncertainty in detecting the position of the mobile device is minor than or equal to the tolerance threshold of the region of the working area where the mobile device has been detected to be located, one passes to block S9. If the uncertainty in detecting the position of the mobile device is greater than the tolerance threshold of the region of the working area where the mobile device has been detected to be located, one passes to block S11;
- block S9 represents a step for checking the compatibility of the reliability of the position of the mobile device with the potentially dangerous characteristics of the region of the working area where the mobile device has been detected to be located;
- block S10 represents a step for authorizing the mobile device to operate in the region of the working area where the mobile device has been detected to be located. Then one return to block S6 for an updated detection of the position of the mobile device and for an updated estimate of the uncertainty in detecting the position of the mobile device in the working area;
- block S11 represents a step of comparison between the uncertainty in detecting the position of the mobile device and the tolerance threshold of at least one further region of the working area, in particular with the tolerance threshold of the region of the working area just inside the one where the mobile device has been detected to be located;
- block S12 represents a decisional step on the basis of the comparison referred to in block S11. If the uncertainty in detecting the position of the mobile device is minor than or equal to the tolerance threshold of a predetermined region of the working area, one continues to block S13. If the uncertainty in detecting of the position of the mobile device is greater than all of the thresholds of the tolerance assigned to the regions of the working area, one moves to block S14;
- block S13 represents a step of movement of the mobile device in the predetermined region of the working area whose tolerance threshold is greater than the uncertainty in the detected position of the mobile device and the subsequent step of authorization of the mobile device to operate in that predetermined region of the working area. One then returns to block S6 for an updated detection of the position of the mobile device and for an updated estimate of the uncertainty in the detected position of the mobile device in the working area;
- block S14 represents a standstill step of the mobile device. At the same time as the mobile device, the payload is also stopped, in particular the rotating blade. When the mobile device comes to a standstill, one then returns to block S6 for an updated detection of the position of the mobile device and for an updated estimate of the uncertainty in the detected position of the mobile device in the working area.

### ADVANTAGES OF THE INVENTION

The present invention allows to obtain important advantages.

Above all, the present invention provides a method for mapping a working area of a mobile device which makes it possible to comply with the stringent current regulations regarding self-driving mobile devices (such as in particular robotic lawnmowers). Thanks to the present invention, laying perimeter wire is no longer required and all the potentials made possible by the most advanced position detection systems are employed adequately.

The advantages of the present invention are intended to be achieved by a mapping method in accordance with one or more of the attached claims.

## Claims

1. Method for mapping a working area (1) of a mobile device (2) for the maintenance of lawns or gardens or agricultural lands, comprising the steps of:
a. defining at least one contour (10) delimiting said working area (1);
b. obtaining from said working area (1) at least one first region (11) and a second region (12), by defining in said working area (1) at least one first boundary (21) marking out said first region (11) and said second region (12); and
c. assigning to said first region (11) a first tolerance threshold, the first tolerance threshold defining a limit about the maximum permissible error in the detection of the position of the mobile device (2) when the mobile device (2) is in the first region (11) or is deemed to be in the first region (11),
**characterised by** further comprising the step of:
d. assigning to said second region (12) a second tolerance threshold,
wherein said first region (11) extends between said contour (10) and said first boundary (21) and said second region (12) extends internally starting from said first boundary (21), said second tolerance threshold being greater than said first tolerance threshold, whereby the second region (12) allows the mobile device (2) a lower precision in detecting or estimating its position with respect to what is required by the first region (11).

2. Mapping method according to claim 1, wherein said mobile device (2) is a mobile device (2) for mowing.

3. Mapping method according to claim 1 or claim 2, wherein the first tolerance threshold is expressed in terms of size.

4. Mapping method according to any one of the preceding claims, wherein said contour (10) is divided into at least a first stretch (10a) and a second stretch (10b), to said first stretch (10a) being assigned a first parameter representative of the type of said contour (10) in correspondence with said first stretch (10a), to said second stretch (10b) being assigned a second parameter representative of the type of said contour (10) in correspondence with said second stretch (10b).

5. Mapping method according to claim 4, wherein said first region (11) comprises at least a first portion (11a) and a second portion (11b), said first portion (11a) extending between said first stretch (10a) and said first boundary (21), said second portion (11b) extending between said second stretch (10b) and said first boundary (21), and wherein the distance between said first stretch (10a) and said first boundary (21) is different from the distance between said second stretch (10b) and said first boundary (21).

6. Mapping method according to any one of the preceding claims, wherein at least one third region (13) is obtained from said working area (1), through the definition in said working area (1) of at least one second boundary (22) marking out said second region (12) and said third region (13), a third tolerance threshold being assigned to said third region (13), wherein said second region (12) extends between said first boundary (21) and said second boundary (22) and said third region (13) extends internally starting from said second boundary (22), said third tolerance threshold being greater than said second tolerance threshold.

7. Mapping method according to any one of the preceding claims, wherein the distance between said contour (10) and said first boundary (21) is minor than the distance between said first boundary (21) and said second boundary (22).

8. Mapping method according to any one of the preceding claims, wherein said contour (10) is defined by recording a trajectory defined by said mobile device (2) or by an operator and assigning to said trajectory the role of contour (10) or part of contour (10), wherein said mobile device (2) comprises means for following an operator and said trajectory is traced by said mobile device (2) following said operator.

9. Mapping method according to claim 8, wherein means are provided for associating at least one stretch of said trajectory with a parameter representative of the type of said contour (10) in correspondence with said at least one stretch of said trajectory, the association of said parameter with said at least one stretch of said trajectory taking place upon recognition of a predetermined command given by said operator, said predetermined command being in particular of a visual, gestural, chromatic, acoustic or tactile type.

10. Mapping method according to any one of the preceding claims, wherein said contour (10) is defined by storing a corresponding path defined by an operator on a map displayed on a remote device.

11. Mapping method according to claim 10, wherein means are provided for associating at least one stretch of said path with a parameter representative of the type of said contour (10) in correspondence with said at least one stretch of said path and/or means for associating at least one portion of said working area (1) with a predefined block of the type of said at least one portion of said working area (1).

12. Mapping method according to any one of the preceding claims, further comprising the step of defining the position of a reference element (30) in said working area (1), said reference element (30) being in particular associated with a fixed base connected to said mobile device (2).

13. Mapping method according to claim 12, wherein the position of said reference element (30) in said working area (1) is defined by recording the position of said mobile device (2) during a recharging operation of said mobile device (2), in particular an initial recharging operation of said mobile device (2), and assuming that the position of said reference element (30) coincides with the position of said mobile device (2) during said recharging operation.

14. Mapping method according to claim 12 or claim 13, wherein said contour (10) and/or said at least one first boundary (21) are defined by means of relative coordinates with respect to the position of said reference element (30) in said working area (1), said relative coordinates preferably comprising at least one linear coordinate and/or at least one angular coordinate.

15. Mapping method according to any one of the preceding claims, wherein said contour (10) and/or said at least one first boundary (21) are defined by means of absolute coordinates obtained from a global navigation satellite system, in particular according to GPS technology.

## Patentansprüche

1. Verfahren zum Abbilden eines Arbeitsbereichs (1) einer mobilen Vorrichtung (2) für die Pflege von Rasen oder Gärten oder landwirtschaftlicher Flächen, umfassend die folgenden Schritte:
a. Definieren wenigstens einer Kontur (10), welche den Arbeitsbereich (1) begrenzt;
b. Erhalten, aus dem Arbeitsbereich (1), wenigstens einer ersten Zone (11) und einer zweiten Zone (12), indem in dem Arbeitsbereich (1) wenigstens eine erste Grenze (21) definiert wird, welche die erste Zone (11) und die zweite Zone (12) abgrenzt; und
c. Zuordnen zu der ersten Zone (11) eines ersten Toleranzschwellenwerts, wobei der erste Toleranzschwellenwert eine Grenze bezüglich des maximalen zulässigen Fehlers bei der Detektion der Position der mobilen Vorrichtung (2) definiert, wenn sich die mobile Vorrichtung (2) in der ersten Zone (11) befindet oder als in der ersten Zone (11) befindlich erachtet wird,
**dadurch gekennzeichnet, dass** es ferner den Schritt umfasst:
d. Zuordnen eines zweiten Toleranzschwellenwerts zu der zweiten Zone (12),
wobei sich die erste Zone (11) zwischen der Kontur (10) und der ersten Grenze (21) erstreckt und sich die zweite Zone (12) innen ausgehend von der ersten Grenze (21) erstreckt, wobei der zweite Toleranzschwellenwert größer als der erste Toleranzschwellenwert ist, wodurch die zweite Zone (12) der mobilen Vorrichtung (2) eine geringere Präzision bei einem Detektieren oder Schätzen ihrer Position in Bezug auf das erlaubt, was durch die erste Zone (11) gefordert ist.

2. Abbildungsverfahren nach Anspruch 1, wobei die mobile Vorrichtung (2) eine mobile Vorrichtung (2) zum Mähen ist.

3. Abbildungsverfahren nach Anspruch 1 oder Anspruch 2, wobei der erste Toleranzschwellenwert in Bezug auf eine Größe ausgedrückt wird.

4. Abbildungsverfahren nach einem der vorhergehenden Ansprüche, wobei die Kontur (10) in wenigstens ein erstes Stück (10a) und ein zweites Stück (10b) unterteilt wird, wobei dem ersten Stück (10a) ein erster Parameter zugeordnet wird, welcher für den Typ der Kontur (10) in Übereinstimmung mit dem ersten Stück (10a) repräsentativ ist, wobei dem zweiten Stück (10b) ein zweiter Parameter zugeordnet wird, welcher für den Typ der Kontur (10) in Übereinstimmung mit dem zweiten Stück (10b) repräsentativ ist.

5. Abbildungsverfahren nach Anspruch 4, wobei die erste Zone (11) wenigstens einen ersten Abschnitt (11a) und einen zweiten Abschnitt (11b) umfasst, wobei sich der erste Abschnitt (11a) zwischen dem ersten Stück (10a) und der ersten Grenze (21) erstreckt, wobei sich der zweite Abschnitt (11b) zwischen dem zweiten Stück (10b) und der ersten Grenze (21) erstreckt, und wobei der Abstand zwischen dem ersten Stück (10a) und der ersten Grenze (21) von dem Abstand zwischen dem zweiten Stück (10b) und der ersten Grenze (21) verschieden ist.

6. Abbildungsverfahren nach einem der vorhergehenden Ansprüche, wobei wenigstens eine dritte Zone (13) aus dem Arbeitsbereich (1) erhalten wird, durch die Definition in dem Arbeitsbereich (1) wenigstens einer zweiten Grenze (22), welche die zweite Zone (12) und die dritte Zone (13) abgrenzt, wobei der dritten Zone (13) ein dritter Toleranzschwellenwert zugeordnet wird, wobei sich die zweite Zone (12) zwischen der ersten Grenze (21) und der zweiten Grenze (22) erstreckt und sich die dritte Zone (13) innen ausgehend von der zweiten Grenze (22) erstreckt, wobei der dritte Toleranzschwellenwert größer als der zweite Toleranzschwellenwert ist.

7. Abbildungsverfahren nach einem der vorhergehenden Ansprüche, wobei der Abstand zwischen der Kontur (10) und der ersten Grenze (21) kleiner als der Abstand zwischen der ersten Grenze (21) und der zweiten Grenze (22) ist.

8. Abbildungsverfahren nach einem der vorhergehenden Ansprüche, wobei die Kontur (10) durch Aufzeichnen einer Trajektorie, welche durch die mobile Vorrichtung (2) oder einen Bediener definiert wird, und durch Zuordnen der Funktion der Kontur (10) oder eines Teils der Kontur (10) definiert wird, wobei die mobile Vorrichtung (2) Mittel zum Folgen eines Bedieners umfasst und die Trajektorie durch die mobile Vorrichtung (2) verfolgt wird, welche dem Bediener folgt.

9. Abbildungsverfahren nach Anspruch 8, wobei Mittel bereitgestellt sind, um wenigstens einem Stück der Trajektorie einen Parameter zuzuordnen, welcher für den Typ der Kontur (10) in Übereinstimmung mit dem wenigstens einen Stück der Trajektorie repräsentativ ist, wobei die Zuordnung des Parameters zu dem wenigstens einen Stück der Trajektorie auf ein Erkennen eines vorbestimmten Befehls hin stattfindet, welcher durch den Bediener eingegeben wird, wobei der vorbestimmte Befehl insbesondere von einem visuellen, gestischen, chromatischen, akustischen oder taktilen Typ ist.

10. Abbildungsverfahren nach einem der vorhergehenden Ansprüche, wobei die Kontur (10) durch Speichern eines entsprechenden Pfades definiert wird, welcher durch einen Bediener auf einer Karte definiert wird, welche auf einer entfernten Vorrichtung angezeigt wird.

11. Abbildungsverfahren nach Anspruch 10, wobei Mittel bereitgestellt sind, um wenigstens einem Stück des Pfades einen Parameter zuzuordnen, welcher für den Typ der Kontur (10) in Übereinstimmung mit dem wenigstens einen Stück des Pfades repräsentativ ist, und/oder Mittel bereitgestellt sind, um wenigstens einem Abschnitt des Arbeitsbereichs (1) einen vordefinierten Block des Typs des wenigstens einen Abschnitts des Arbeitsbereichs (1) zuzuordnen.

12. Abbildungsverfahren nach einem der vorhergehenden Ansprüche, ferner umfassend den Schritt eines Definierens der Position eines Referenzelements (30) in dem Arbeitsbereich (1), wobei das Referenzelement (30) insbesondere einer fixierten Basis zugeordnet wird, welche mit der mobilen Vorrichtung (2) verbunden ist.

13. Abbildungsverfahren nach Anspruch 12, wobei die Position des Referenzelements (30) in dem Arbeitsbereich (1) durch Aufzeichnen der Position der mobilen Vorrichtung (2) während eines Wiederaufladevorgangs der mobilen Vorrichtung (2), insbesondere eines initialen Wiederaufladevorgangs der mobilen Vorrichtung (2), und durch Annehmen, dass die Position des Referenzelements (30) mit der Position der mobilen Vorrichtung (2) während des Wiederaufladevorgangs zusammenfällt, definiert wird.

14. Abbildungsverfahren nach Anspruch 12 oder Anspruch 13, wobei die Kontur (10) und/oder die wenigstens eine erste Grenze (21) mittels relativer Koordinaten in Bezug auf die Position des Referenzelements (30) in dem Arbeitsbereich (1) definiert wird, wobei die relativen Koordinaten vorzugsweise wenigstens eine lineare Koordinate und/oder wenigstens eine Winkelkoordinate umfassen.

15. Abbildungsverfahren nach einem der vorhergehenden Ansprüche, wobei die Kontur (10) und/oder die wenigstens eine erste Grenze (21) mittels absoluter Koordinaten definiert werden, welche aus einem globalen Navigationssatellitensystem, insbesondere gemäß GPS-Technologie, erhalten werden.

## Revendications

1. Procédé de cartographie d'une zone de travail (1) d'un dispositif portable (2) pour l'entretien de gazons ou de jardins ou de terres agricoles, comprenant les étapes de :
a. définition d'au moins un contour (10) délimitant ladite zone de travail (1) ;
b. obtention à partir de ladite zone de travail (1) d'au moins une première région (11) et une seconde région (12), en définissant dans ladite zone de travail (1) au moins une première limite (21) marquant ladite première région (11) et ladite seconde région (12) ; et
c. attribution à ladite première région (11) d'un premier seuil de tolérance, le premier seuil de tolérance définissant une limite autour de l'erreur permissible maximale dans la détection de la position du dispositif portable (2) lorsque le dispositif portable (2) se trouve dans la première région (11) ou est censé se trouver dans la première région (11), **caractérisé en ce qu'**il comprend en outre l'étape de :
d. attribution à ladite seconde région (12) d'un second seuil de tolérance,
ladite première région (11) s'étendant entre ledit contour (10) et ladite première limite (21) et ladite seconde région (12) s'étendant au plan interne en commençant à partir de ladite première limite (21), ledit second seuil de tolérance étant supérieur audit premier seuil de tolérance, moyennant quoi la seconde région (12) offre au dispositif portable (2) une précision inférieure dans la détection ou l'estimation de sa position par rapport à ce qui est requis par la première région (11).

2. Procédé de cartographie selon la revendication 1, ledit dispositif portable (2) étant un dispositif portable (2) pour la tonte.

3. Procédé de cartographie selon la revendication 1 ou la revendication 2, le premier seuil de tolérance étant exprimé en termes de taille.

4. Procédé de cartographie selon l'une quelconque des revendications précédentes, ledit contour (10) étant divisé en au moins une première étendue (10a) et une seconde étendue (10b), à ladite première étendue (10a) étant attribué un premier paramètre représentatif du type dudit contour (10) en correspondance de ladite première étendue (10a), à ladite seconde étendue (10b) étant attribué un second paramètre représentatif du type dudit contour (10) en correspondance de ladite seconde étendue (10b).

5. Procédé de cartographie selon la revendication 4, ladite première région (11) comprenant au moins une première portion (11a) et une seconde portion (11b), ladite première portion (11a) s'étendant entre ladite première étendue (10a) et ladite première limite (21), ladite seconde portion (11b) s'étendant entre ladite seconde étendue (10b) et ladite première limite (21), et la distance entre ladite première étendue (10a) et ladite première limite (21) étant différente de la distance entre ladite seconde étendue (10b) et ladite première limite (21).

6. Procédé de cartographie selon l'une quelconque des revendications précédentes, au moins une troisième région (13) étant obtenue à partir de ladite zone de travail (1), à travers la définition dans ladite zone de travail (1) d'au moins une seconde limite (22) marquant ladite seconde région (12) et ladite troisième région (13), un troisième seuil de tolérance étant attribué à ladite troisième région (13), ladite seconde région (12) s'étendant entre ladite première limite (21) et ladite seconde limite (22) et ladite troisième région (13) s'étendant au plan interne en commençant à partir de ladite seconde limite (22), ledit troisième seuil de tolérance étant supérieur audit second seuil de tolérance.

7. Procédé de cartographie selon l'une quelconque des revendications précédentes, la distance entre ledit contour (10) et ladite première limite (21) étant mineure par rapport à la distance entre ladite première limite (21) et ladite seconde limite (22).

8. Procédé de cartographie selon l'une quelconque des revendications précédentes, ledit contour (10) étant défini en enregistrant une trajectoire définie par ledit dispositif portable (2) ou par un opérateur et l'attribution à ladite trajectoire du rôle du contour (10) ou d'une partie du contour (10), ledit dispositif portable (2) comprenant un moyen de suivi d'un opérateur et ladite trajectoire étant tracée par ledit dispositif portable (2) suivant ledit opérateur.

9. Procédé de cartographie selon la revendication 8, ledit moyen étant fourni pour associer au moins une étendue de ladite trajectoire à un paramètre représentatif du type dudit contour (10) en correspondance de ladite au moins une étendue de ladite trajectoire, l'association dudit paramètre à ladite au moins une étendue de ladite trajectoire ayant lieu lors de la reconnaissance d'une commande prédéterminée donnée par ledit opérateur, ladite commande prédéterminée étant en particulier d'un type visuel, gestuel, chromatique, acoustique ou tactile.

10. Procédé de cartographie selon l'une quelconque des revendications précédentes, ledit contour (10) étant défini en stockant un trajet correspondant défini par un opérateur sur une carte affichée sur un dispositif distant.

11. Procédé de cartographie selon la revendication 10, un moyen étant fourni pour associer au moins une étendue dudit trajet à un paramètre représentatif du type dudit contour (10) en correspondance de ladite au moins une étendue dudit trajet et/ou un moyen d'associer au moins une portion de ladite zone de travail (1) à un bloc prédéfini du type de ladite au moins une portion de ladite zone de travail (1).

12. Procédé de cartographie selon l'une quelconque des revendications précédentes, comprenant en outre l'étape de définition de la position d'un élément de référence (30) dans ladite zone de travail (1), ledit élément de référence (30) étant en particulier associé à une base fixe raccordée audit dispositif portable (2).

13. Procédé de cartographie selon la revendication 12, la position dudit élément de référence (30) dans ladite zone de travail (1) étant définie en enregistrant la position dudit dispositif portable (2) durant une opération de recharge dudit dispositif portable (2), en particulier une opération de recharge initiale dudit dispositif portable (2), et en faisant l'hypothèse que la position dudit élément de référence (30) coïncide avec la position dudit dispositif portable (2) durant ladite opération de recharge.

14. Procédé de cartographie selon la revendication 12 ou la revendication 13, ledit contour (10) et/ou ladite au moins une première limite (21) étant définis à l'aide de coordonnées relatives par rapport à la position dudit élément de référence (30) dans ladite zone de travail (1), lesdites coordonnées relatives comprenant préférablement au moins une coordonnée linéaire et/ou au moins une coordonnée angulaire.

15. Procédé de cartographie selon l'une quelconque des revendications précédentes, ledit contour (10) et/ou ladite au moins une première limite (21) étant définis à l'aide de coordonnées absolues obtenues à partir d'un système mondial de navigation par satellite, en particulier selon la technologie GPS.
